# EUROPEAN PATENT APPLICATION

(11) **EP 1 901 180 A1**
(43) Date of publication of application: **19.03.2008**
(21) Application number: 06120329.5
(22) Date of filing: 07.09.2006
(51) Int. Cl.: G06F 17/30

(54) **System and method of generating databases**

(71) Applicant: Research In Motion Limited, Waterloo, Ontario N2L 3W8 (CA)
(72) Inventor: Shneur, Igor, Toronto Ontario M2M 4B9 (CA); Kyprianou, Nikos, Scarborough Ontario M1H 1W6 (CA); Tang, Allen, Toronto Ontario M1W 3T7 (CA); Shkolnik, Michael, Thornhill Ontario L4J 8M8 (CA)
(74) Representative: Rickard, David John

(57) **Abstract**

A database schema generator and a method of converting web service description language (WSDL) structures into database (DB) schemas are provided. The database schema generator comprises a WSDL analyzer for obtaining operations and data types from a WSDL and a DB element definition builder for building a DB element definition for each WSDL component. The WSDL component comprises one or more of complex data types of the WSDL and messages of the WSDL. The method comprises the steps of analyzing a WSDL and generating a DB schema based upon the WSDL structure.

## Description

The present patent disclosure relates generally to a system and method of generating databases.

Web Services play an important role in application to application communication and software access over the network. There are application development tools for the creation of database client applications which communicate with databases. However, for those development tools to enter the web service world, there is a need for a new type of databases when using and testing them. There are a variety of databases that pertain to development tools that may require testing.

Custom made databases that mirror the structure and functionality (operations) of web services can be used to test the entrance of such application development tools into the web service world. The problem with using custom made databases is that creating such databases manually is a long and tedious process. Creating databases that mirror web service structure and functionality (operations) can be a very time and resource consuming process.

There are currently ways of converting databases to web service description language (WSDL). These ways allow database functionality to enter the web service market. Unfortunately, these ways do not provide databases that mimic web services (WSDL structures). Without those kind of databases, it is difficult for the application development tool to be able to create clients/applications from databases (with database backends/data sources), while at the same time providing the clients with access to web service structures and functionality. Therefore, there is a need for a system and method of generating databases that would have the same structure and functionality as web services.

### GENERAL

In accordance with an embodiment of the present patent disclosure there may be provided a database schema generator for converting web service description language (WSDL) structures into database (DB) schemas. The database schema generator may comprise a WSDL analyzer for obtaining operations and data types from a WSDL and a DB element definition builder for building a DB element definition for each WSDL component. The WSDL component comprises one or more of complex data types of the WSDL and messages of the WSDL.

In accordance with another embodiment of the present patent disclosure there may be provided a method of converting web service description language (WSDL) structures into database (DB) schemas. The method may comprise the steps of analyzing a WSDL and generating a DB schema based upon the WSDL structure.

In accordance with another embodiment of the present patent disclosure there may be provided a computer program product for generating database (DB) schemas. The computer program product comprises a computer readable medium embodying program code means for implementing on a computer processor a method of converting web service description language (WSDL) structures into DB schemas. The method may comprise the steps of analyzing a WSDL and generating a DB schema based upon the WSDL structure.

### BRIEF DESCRIPTION OF THE DRAWINGS

An embodiment of the patent disclosure will now be described by way of example only with reference to the following drawings in which:
Figure 1 shows in a component diagram an example of DB schema generator for converting WSDL functionality into a DB schema, in accordance with an embodiment of the present patent disclosure;
Figure 2 shows in a component diagram an example of the DB schema generator in more detail;
Figure 3 shows in a flowchart an example of a method of converting WSDL functionality into DB schemas, in accordance with an embodiment of the DB schema generator;
Figure 4 shows in a flowchart an example of a method of converting WSDL functionality into DB schemas in more detail;
Figure 5 shows in flowchart an example of a method of analyzing a WSDL to transform it into a DB schema, in accordance with an embodiment of the DB schema generator;
Figure 6 shows in a component diagram an example of a DB structure generator for converting WSDLs into DB structures, in accordance with another embodiment of the present patent disclosure;
Figure 7 shows in a flowchart an example of a method of creating DB structures, in accordance with an embodiment of the DB structures generator; and
Figure 8 shows in a detailed block diagram an example of a handheld device.

### DESCRIPTION OF PREFERRED EMBODIMENTS

A system and method of the present patent disclosure will now be described with reference to various examples of how the embodiments can best be made and used. For convenience, like reference numerals are used throughout the description and several views of the drawings to indicate like or corresponding parts, wherein the various elements are not necessarily drawn to scale.

WSDL is an XML format for describing network services as a set of endpoints operating on messages that contain either document-oriented or procedure-oriented information. The operations and messages are described abstractly and then bound to a concrete network protocol and message format to define an endpoint. Related concrete endpoints are combined into abstract endpoints or services. WSDL is extensible, enabling the description of endpoints and their messages regardless of what message formats or network protocols are used to communicate.

A web service description language (WSDL) construct may be defined as follows:

```
       WSDL
          -Service
              -Port type
                  -Operations (set)
                      -Messages
                         -Complex data types
                             -Simple data types
```

A service specifies the location of the web service. A port type defines the operations and the messages used by the web service. Operations specify the messages that are used to perform the operations. Messages refer to messages that are sent and received by the web service to perform operations. Complex data types comprise subelements of simple types and complex types. Simple data types do not contain subelements nested within them. Simple types are usually primitive types, such as int, short, long, float, boolean, char, byte, double, string, etc.

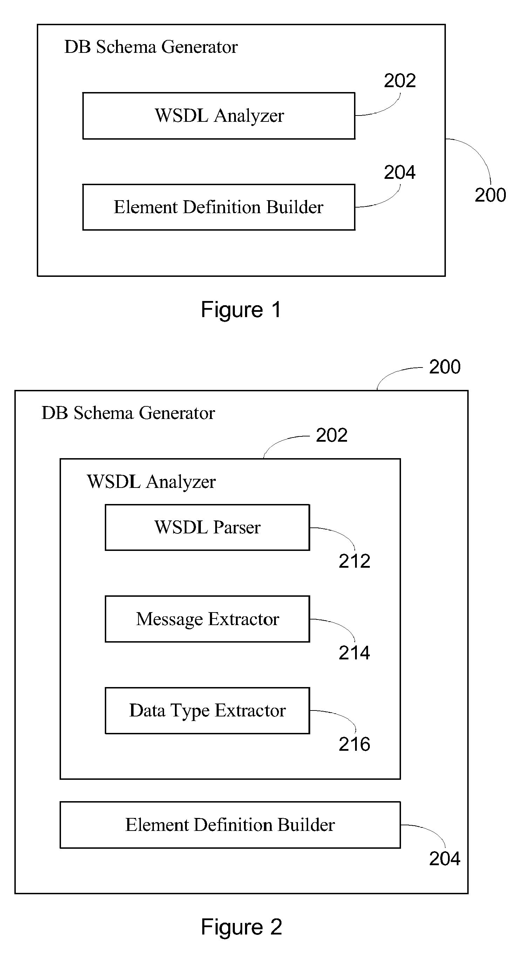

A database (DB) is usually defined by developing a schema for the DB. Figure 1 shows an example of DB schema generator 200 for converting WSDL functionality into a DB schema, in accordance with an embodiment of the present patent disclosure. The DB schema generator 200 comprises a WSDL analyzer 202 for obtaining operations and data types from a WSDL and a DB element definition builder 204 for building a DB element definition for each complex data type of the WSDL. Other components may be added to the DB schema generator 200. The DB element definition builder may optionally build DB element definitions for messages in the WSDL. Sometimes a WSDL may not contain any complex data types. In this scenario, the DB element definition builder 204 will build DB element definitions for each message of the WSDL. Such messages may be inbound or outbound messages, or both.

Figure 2 shows an example of the DB schema generator 200 in more detail. The WSDL analyzer 202 comprises a WSDL parser 212 for traversing operations of the WSDL, a message extractor 214 for extracting messages from the WSDL and a data type extractor 216 for extracting complex and simple data types used in the WSDL. Other components may be added to the DB schema generator 200.

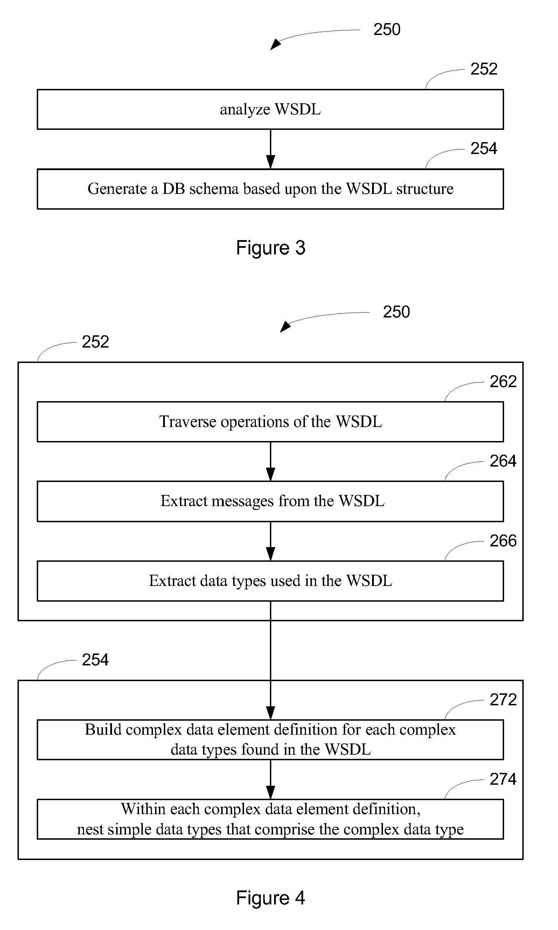

Figure 3 shows in a flowchart an example of a method of converting WSDL functionality into DB schemas (250), in accordance with an embodiment of the DB schema generator 200. The method (250) comprises the steps of analyzing a WSDL (252) and generating a DB schema based upon the WSDL structure (254). Other steps may be added to the method (250).

Figure 4 shows in a flowchart an example of a method of converting WSDL functionality into DB schemas (250) in more detail. The step of analyzing a WSDL (252) comprises the steps of traversing operations of the WSDL (262), extracting messages from the WSDL (264) and extracting data types used in the WSDL (266). Both complex and simple data types may be extracted from the WSDL. The step of generating a DB schema based upon the WSDL structure (254) comprises the step of building a complex data element definition for a complex data type found in the WSDL (272). The corresponding simple data types that comprise the complex data type may be nested within the element definition of the complex data type (274). Steps (272) and (274) are repeated (276) for each complex data type in the WSDL. Other steps may be added to the method (250), including generating a message element definition for each message in the WSDL, and nesting message part element definitions in the message element definition.

Advantageously, a database schema may be generated based upon WSDL operations and data types. Each complex WSDL data type may be mapped to a DB table in a DB schema, and optionally, WSDL messages may be mapped to DB tables.

Since a large pool of web services presently exist, it is advantageous to create test databases from those web services. That way the same type of functionalities that existing web services provide may be used during the testing of development of applications with web service functionalities using databases.

When the database is created from a web service, it resembles the web service structure. In order for the database to have the same functionality as the web service, procedures may be created for the database and stored within the database. Those stored procedures resemble the web service operations.

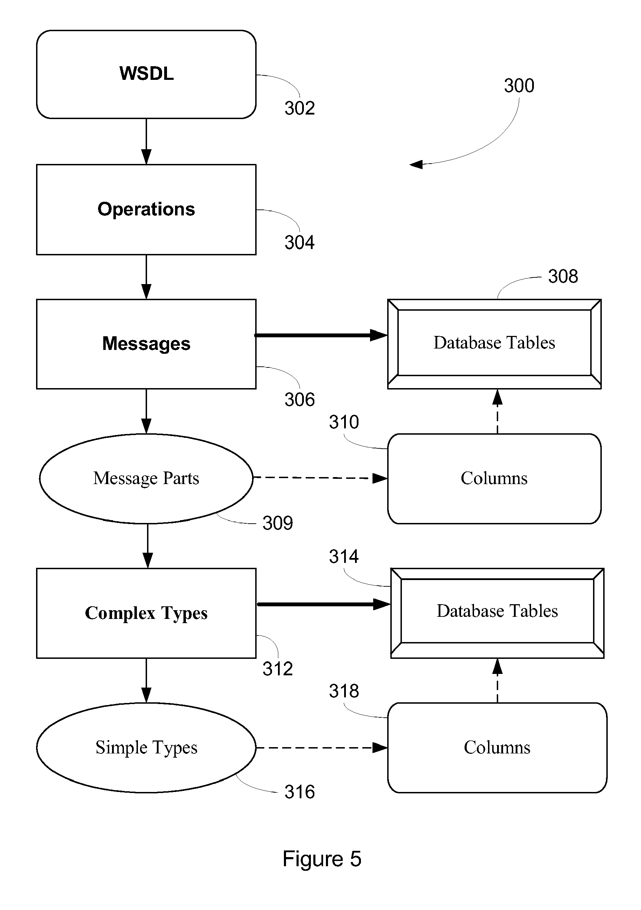

Figure 5 shows in process flow diagram an example of a method of analyzing a WSDL to transform it into a DB schema (300), in accordance with an embodiment of the DB schema generator 200. The WSDL 302 is analyzed to extract its operations 304 that are in turn analyzed to extract the WSDL messages 306. Each message is converted into a message element definition which eventually is converted into a corresponding database table 308 where the message parts 309 are its columns 310. Next, complex types 312 of the WSDL are extracted and converted into complex data element definitions which are eventually converted into data type database tables 314 where the simple data types 316 are its columns 318.

An example of an embodiment of a DB schema generator 200 will now be described. In this embodiment, the conversion from WSDL to XML DB Schema is implemented in Java using the Web Tools Platform of Eclipse. The DB schema generator 200 extracts the WSDL complex types, messages and message parts, and based on those components builds an XML DB Schema. The converter works by using Java's Reflection on the WSDL's JavaBean skeleton which can be generated using the J2EE tools of the Web Tools Platform.

The WSDL portType becomes the main interface of a JavaBean, which is the starting point of the parsing process (252). The interface comprises method declarations, which represent the WSDL operations. Each of the method declarations contains arguments and return types. The arguments represent WSDL's inbound messages and the return types represent the outbound messages.

After the above information is extracted (264), the WSDL is checked for complex types (266) and enumerations as follows: the return and the arguments types are checked, and for any that are enumerations or of complex type, the instance fields of the Java class representing the complex type or enumeration are checked, and if any of them are found to be enumerations or of complex type, their Java classes are analyzed. This procedure is repeated until no more complex types or enumerations are found.

The target schema is generated for the purpose of creating database structures from it, and therefore its structure differs from the structure of a regular XML Schema (XSD) created for the purpose of providing the structure, content and semantics of XML documents.

An example of the building process of the schema (204) from the components extracted from the JavaBean will now be described. Every complex type represents a table in the database and every simple type nested within the complex types represents a column in this table. Therefore for every complex type definition created in the schema, the complex type definition wrapped in an element declaration is created as well. Thus, a tool that creates tables from element declarations may now use the complex type definition to create a corresponding table.

For example, for the following complex type definition:

```
       <xsd:complexType name="SearchRecord">
              <xsd:sequence>
                      <xsd:element name="recordId" type="xsd:int"/>
                      <xsd:element name="firstName" type= "xsd:string"/>
                      <xsd: element name="lastName" type="xsd:string"/>
                      <xsd:element name="phone" type="xsd:string"/>
                      <xsd:element name="street" type="xsd:string"/>
                      <xsd:element name="city" type="xsd:string"/>
                      <xsd:element name="province" type="xsd:string"/>
                      <xsd:element name="postalCode" type="xsd:string"/>
              </xsd:sequence>
       </xsd:complexType>
```

the following element will also be generated in the schema:

```
       <xsd:element name="SearchRecord">
              <xsd:complexType>
                      <xsd:sequence>
                             <xsd:element name="recordId" type="xsd:int"/>
                             <xsd:element name="firstName" type="xsd:string"/>
                             <xsd:element name="lastName" type="xsd:string"/>
                             <xsd:element name="phone" type="xsd:string"/>
                             <xsd:element name="street" type="xsd:string"/>
                             <xsd:element name="city" type="xsd:string"/>
                             <xsd:element name="province" type="xsd:string"/>
                             <xsd:element name="postalCode" type="xsd:string"/>
                      </xsd:sequence>
              </xsd:complexType>
       </xsd:element>
```

In the above example of xsd:element, "SearchRecord" will be a table name, and each xsd:element inside xsd:sequence will be a column in the table.

Element definitions for the inbound and outbound messages can optionally be created. If the user chooses to create definitions for inbound and/or outbound messages, each of those messages are considered to represent a table and are wrapped in an element declaration. The message parts are considered to represent columns inside those tables, and are nested inside those elements.

For example, the following elements represent an inbound and an outbound message, respectively:

```
       <xsd:element name="searchPerson">
              <xsd:complexType>
                      <xsd:sequence>
                             <xsd:elementname="request" type="tns:PersonalSearchRequest"/>
                      </xsd:sequence>
              </xsd:complexType>
       </xsd:element>
```

```
       <xsd: element name="searchPersonResponse">
              <xsd: complexType>
                      <xsd:sequence>
                             <xsd:element name="searchPersonReturn" type="tns:SearchResults"/>
                      </xsd: sequence>
              </xsd:complexType>
       </xsd:element>
```

Reused complex types and enumerations are handled properly. That is, every complex type and enumeration definition appears in the XML DB Schema as many times as it is referenced. This is optional as well and is useful when dealing with WSDLs representing web services that reference the same complex type or enumeration definition to define types of different elements. From a database perspective, each of those elements should be represented by a separate table and therefore, the DB schema generator 200 generates a separate complex type/enumeration definition for each repetitive reference of this type.

For example, the following definitions represent the same complex type; note that a second definition was created since the type was referenced twice:

```
 <xsd:element name="SearchRecord">
              <xsd:complexType>
                      <xsd:sequence>
                             <xsd:element name="recordId" type="xsd:int"/>
                             <xsd:element name="firstName" type="xsd:string"/>
                             <xsd:element name="lastName" type="xsd:string"/>
                             <xsd:element name="phone" type="xsd:string"/>
                             <xsd:element name="street" type="xsd:string"/>
                             <xsd:element name="city" type="xsd:string"/>
                             <xsd:element name="provinee" type="xsd:string"/>
                             <xsd:element name="postalCode" "type="xsd:string"/>
                      </xsd:sequence>
              </xsd:complexType>
       </xsd:element>
```

```
       <xsd:element name="SearchRecord2">
              <xsd:complexType>
                      <xsd:sequence>
                             <xsd:element name="recordId" type="xsd:int"/>
                             <xsd:element name="firstName" type="xsd:string"/>
                             <xsd:element name="lastName" type="xsd:string"/>
                             <xsd:element name="phone" type="xsd:string"/>
                             <xsd:element name="street" type="xsd:string"/>
                             <xsd:element name="city" type="xsd:string"/>
                             <xsd:element name="province" type="xsd:string"/>
                             <xsd:element name="postalCode" type="xsd:string"/>
                      </xsd:sequence>
              </xsd:complexType>
       </xsd:element>
```

Optionally, the DB schema generator 200 can group all the types used in a WSDL into a single element definition. This option is useful when creating a DB structure from a WSDL that contains only simple schema types. All those types can be grouped into a single element definition in the DB schema and hence a single table in the database, even though each belongs to a different operation, advantageously eliminating the need of having several tables with just one column each.

For example, instead of having the following separate definitions:

```
       <xsd:element name="echoString">
              <xsd:complexType>
                      <xsd:sequence>
                             <xsd:element name="in0" type="xsd:string"/>
                      </xsd:sequence>
              </xsd:complexType>
       </xsd:element>
```

```
       <xsd:element name="echoDate">
              <xsd:complexType>
                      <xsd:sequence>
                             <xsd:element name="in0" type="xsd:dateTime"/>
                      </xsdaequence>
              </xsd:complexType>
       </xsd:element>
       <xsd:element name="echoInt">
              <xsd:complexType>
                      <xsd:sequence>
                             <xsd:element name="in0" type="xsd:int"/>
                      </xsd:sequence>
              </xsd:complexType>
       </xsd:element>
```

those different types can be grouped into a single element definition as follows:

```
       <xsd:element name="echoTypes">
              <xsd:complexType>
                      <xsd:sequence>
                             <xsd:element name="in0" type="xsd:string"/>
                             <xsd:element name'="in1" type="xsd:dateTime"/>
                             <xsd:element name'="in2" type="xsd:int"/>
                      </xsd:sequence>
              </xsd:complexType>
       </xsd:element>
```

An example of generating databases from the DB schemas generated using the DB schema generator 200 will now be described. This example of an implementation of an embodiment of the DB schema generator 200 is described to work with Altova XMLSpy. Other DB structure tools that convert DB schemas into DB structures may be used. To create a DB structure from an XML DB Schema in XMLSpy, the following steps are taken:
1. Open the schema in XMLSpy;
2. Click on the Schema/WSDL tab at the bottom;
3. Select Convert from the menu and click on Create DB Structure from XML Schema;
4. Select the desired Source Database and proceed to define primary-foreign key relationships between tables; and
5. Edit the SQL statements if necessary, and proceed to create tables in the selected source database.

During the process of creating a DB structure, WSDL components are converted to XML DB Schema components using the DB schema generator 200, and the schema components in turn are converted to DB components. Table 1 summarizes this conversion process. The transition from column 1 to column 2 is made by the DB schema generator 200 and XMLSpy makes the transition from column 2 to column 3:

**Table 1: Conversion Process Summary**

| WSDL | XML DB Schema | DB structure |
|---|---|---|
| Complex types | Complex type definitions, Complex types wrapped in an element | Tables |
| Simple types nested within complex types | Sub elements inside the above complex type definitions | Columns in tables created from complex types |
| Messages | Complex types wrapped in an element | Tables |
| Message parts | Sub elements inside the above message complex type definitions | Columns in tables created from messages |
| Elements whose type is complex | Elements whose type is complex | Tables |

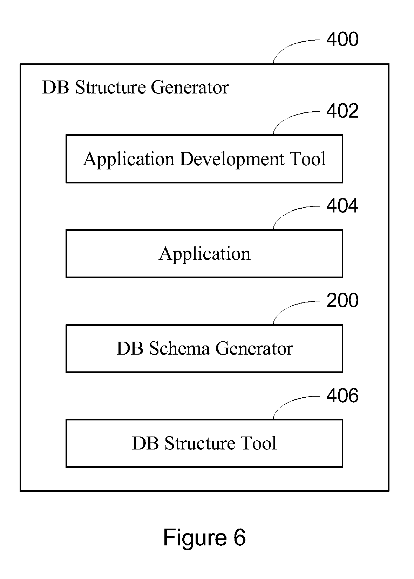

The DB schema generator 200 may be used as part of a system to generate DB structures. Figure 6 shows in a component diagram and example of a DB structure generator 400 for converting WSDLs into DB structures, in accordance with another embodiment of the present patent disclosure. The DB structure generator 400 comprises an application development tool 402 for integrating enterprise web services and databases with a mobile device, an application 404 having a web service or database backend for deployment on the mobile device, the DB schema generator 200 for generating a DB schema, and a DB structure tool 406 for generating DB structures from the DB schema. Other components may be added to the DB structure generator 400.

In one embodiment, the application development tool 402 is the BlackBerry ™ MDS Studio. BlackBerry MDS Studio is a rapid application development tool that is designed to integrate enterprise web services and databases with BlackBerry devices. The Studio enables users to create client applications that are connected to a web service or a database backend. It generates the graphical user interface and a set of messages and operations which allow the application to interact with its data sources once it has been downloaded to a BlackBerry device.

In one embodiment, the application 404 is a BlackBerry MDS Application. BlackBerry MDS Application is an application created by the BlackBerry MDS Studio for deployment on the BlackBerry devices. It can have a web service or a database backend, has a graphical user interface and a set of messages and operations which resemble its backend and can be used to interact/communicate with the data source behind it. An MDS Application can also be created using the Top-Down approach, in which case the above artifacts can be added manually.

In one embodiment, the DB structure tool 406 is for creating Database structures from an XML DB Schema: Any tools/software that can create a database structure from an XML DB Schema.

An example of the technique described in this patent disclosure document will be described as a plug-in for BlackBerry MDS Studio.

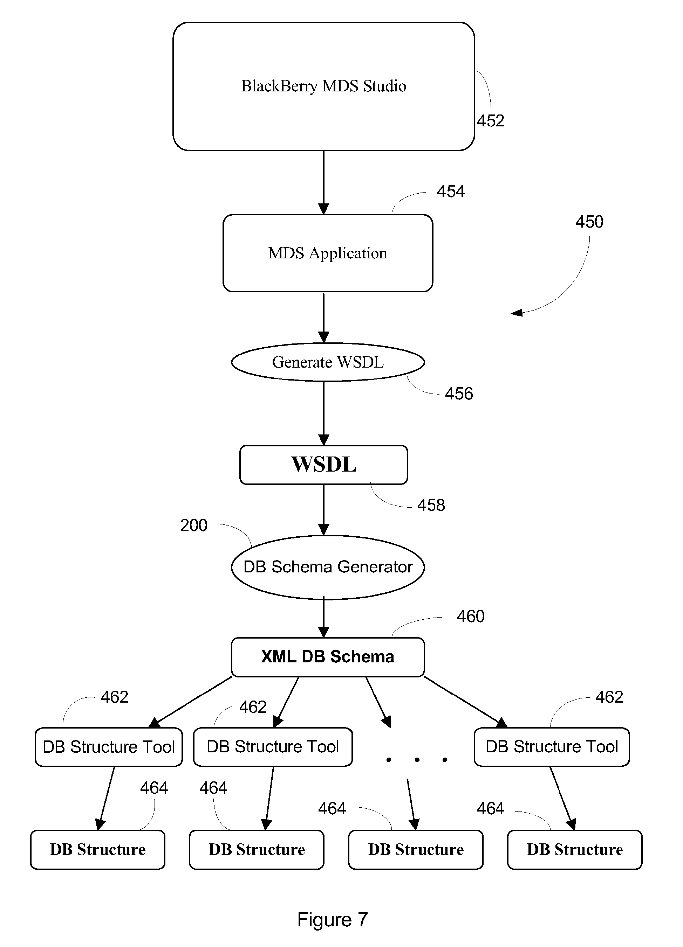

Figure 7 shows in an object output flow diagram an example of a method of creating DB structures 450, in accordance with an embodiment of the DB structures generator 400. The BlackBerry MDS Application 454 with unbound messages created in BlackBerry MDS Studio 452. If the application has unbound messages, the WSDL Generation feature 456 (called Generate WSDL) of BlackBerry MDS Studio can be used to generate a web service definition (WSDL 458). The WSDL generation wizard automatically analyses the inbound and outbound messages, and based on the message names, it attempts to organize them into in/out pairs and bind them to an operation. The generated WSDL file acts as a starting point for the conversion of the WSDL to a DB schema.

In one embodiment, the DB schema generator 200 generates XML Database Schemas based on a WSDL file. The DB schema generator 200 is applied to the WSDL 458 generated from an MDS Application 454, which results in an XML DB Schema 460. This conversion occurs in a manner which enables proper mapping from WSDL components to database components. The final mappings between those components are summarized in Table 1 shown below.

The XML DB Schema 460 created by the DB schema generator 200 has a format that enables it to be converted to a DB structure 462, which includes tables and relations between them. To convert the schema to a DB structure 462, a DB structure tool 406 that has the ability to create DB structures 462 from XML DB Schemas 460 can be used. Since the techniques of creating database structures 462 from schemas 460 may vary from tool 406 to tool 406, the DB schema generator 200 can create the XML DB Schema 460 based on the technique of the particular DB structure tool 406 used. The technique of the third-party tool refers to the rules it uses to create DB structures. For example, XMLSpy creates a table for every element of complex type in the XML DB Schema. In the present embodiment, the DB schema generator 200 generates XML DB schemas according to XMLSpy's rules. However, the DB schema generator 200 may implemented to work with other DB tools that have the ability to convert DB schemas to databases. If any other format is required by any other tool, the DB schema generator 200 may be implemented to build the DB schema according to this format.

One purpose of such a tool 406 is to generate SQL statements for table creation. At this stage, users have the ability to adjust the SQL statements, specify primary-foreign key relationships, add/remove tables and columns and so on. After the necessary adjustments, if any, are completed, users can specify a source database and the tool will execute the SQL statements and generate tables in the specified database.

In the process of converting a WSDL 458 to an XML DB Schema 460 and then to a DB structure 462, WSDL components are being mapped/converted to DB components. This mapping occurs as follows:
- Complex types of a WSDL 460 become tables in the database;
- Simple types nested within the complex types become columns in the complex types tables;
- Inbound and outbound messages of every WSDL operation become tables; and
- Message parts become columns in the tables created from messages. Table 2 summarizes the mapping of WSDL components to database components.

**Table 2: Summary of the Mapping of WSDL components to DB components**

| WSDL | DB structure |
|---|---|
| Complex types | Tables |
| Simple types nested within complex types | Columns in tables created from complex types |
| Messages | Tables |
| Message parts | Columns in tables created from messages |

### Example

This Example illustrates the generation of a DB structure based on a DB schema which is generated based on a WSDL.

The following is an example of a WSDL. It has 2 complex types - PersonalSearchRequest and SearchResults, and 2 messages - SearchPersonRequest and SearchPersonResponse. The complex type PersonalSearchRequest is represented by the element named "request" and SearchResults is represented by the element named "response". This example omits details of components such as portTypes and binding information:

```
 <wsdl:types>
 
  <schema xmlns="............. ">
 
 <complexType name="PersonalSearchRequest">
         <sequence>
                 <element name="firstNameBeginWith" type="xsd:boolean"/>
                 <element name="firstName" nillable="true" type="xsd:string"/>
                 <element name="lastNameBeginWith" type="xsd:boolean"/>
                 <element name="lastName" nillable="true" type="xsd:string"/>
                 <element name="cityZip" nillable="true" type="xsd:string"/>
                 <element name="province" nillable="true" type="xsd:string"/>
         </sequence>
 </complexType>
 
 <element name="request" type="impl:PersonalSearchRequest"/>
 
 <complexType name="SearchResults">
         <sequence>
                      <element name="details" nillable="true" type="xsd:string"/>
         </sequence>
 </complexType>
 
 <element name="response" type="impl:SearchResults"/>
 
  </schema>
 
 </wsdl:types>
 
 <wsdl:message name="searchPersonRequest">
 
          <wsdl:part name="request" element="impl:request"/>
 
 </wsdl:message>
 
 <wsdl:message name="searchPersonResponse">
 
          <wsdl:part name="searchPersonReturn" element="impl:response"/>
 
 </wsdl:message>
 
 <wsd1:portType name="Canada41 1ServiceIF">
  
 </wsdl:portType>
 </wsdl: definitions>
```

The following XML DB schema is an example of a DB schema which is generated by the DB schema generator 200 based upon the above WSDL. As can be seen in the DB schema, element definitions are created for both messages - searchPerson and searchPersonResponse, and for both complex types - PersonalSearchRequest and SearchResults.

```
 <xsd:schema xmlns:xsd="...... ">
       <xsd:element name="searchPerson">
              <xsd:complexType>
                      <xsd:sequence>
                             <xsd:element name="request" type="tns:PersonalSearchRequest"/>
                      </xsd:sequence>
              </xsd:complexType>
       </xsd:element>
       <xsd:element name="searchPersonResponse">
              <xsd: complexType>
                      <xsd:sequence>
                             <xsd:element name="searchPersonReturn" type="tns:SearchResults"/>
                      </xsd:sequence>
              </xsd:complexType>
       </xsd:element>
       <xsd:complexType name="PersonalSearchRequest">
              <xsd:sequence>
                      <xsd:element name="firstNameBeginWith" type="xsd:boolean"/>
                      <xsd:element name="firstName" type="xsd:string"/>
                      <xsd:element name="lastNameBeginWith" type="xsd:boolean"/>
                      <xsd:element name="lastName" type="xsd:string"/>
                      <xsd:element name="cityZip" type="xsd:string"/>
                      <xsd:element name="province" type="xsd:string"/>
              </xsd:sequence>
       </xsd:complexType>
       <xsd:element name="PersonalSearchRequest">
              <xsd:complexType>
                      <xsd:sequence>
                             <xsd:element name="firstNameBeginWith" type="xsd:boolean"/>
                             <xsd:element name="firstName" type="xsd:string"/>
                             <xsd:element name="lastNameBeginWith" type="xsd:boolean"/>
                             <xsd:element name="lastName" type="xsd:string"/>
                             <xsd:element name="cityZip" type="xsd:string"/>
                             <xsd:element name="province" type="xsd:string"/>
                      </xsd:sequence>
              </xsd:complexType>
       </xsd:element>
       <xsd:complexType name="SearchResults">
              <xsd:sequence>
                      <xsd:element name="details" type="xsd:string"/>
                      <xsd:element name="totalRecords" type="xsd:int"/>
              </xsd:sequence>
       </xsd:complexType>
       <xsd:element name="SearchResults">
              <xsd: complexType>
                      <xsd:sequence>
                             <xsd:element name="details" type="xsd:string"/>
                             <xsd:element name="totalRecords" type="xsd:int"/>
                      </xsd:sequence>
              </xsd:complexType>
       </xsd:element>
 </xsd:schema>
```

The following is a listing of tables (followed by their columns) that are generated in a database from the element definitions of the above DB schema:
- SearchPerson: request
- SearchPersonResponse: searchPersonReturn
- PersonalSearchRequest: firstNameBeginWith, firstName, lastNameBeginWith, lastName, cityZip, province
- SearchResults: details, totalRecords
Once the above tables are generated, the creation of a DB structure based upon the above WSDL is complete.

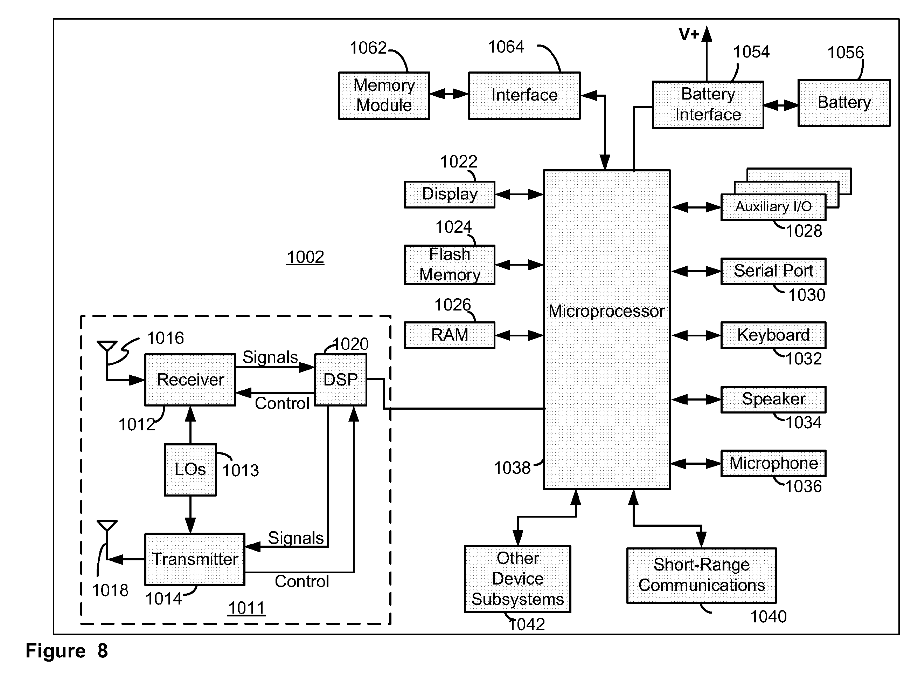

Figure 8 is a detailed block diagram of a preferred handheld device 1002 adapted in accordance with an embodiment that may be used as an electronic device having message and organization system functions as described. Handheld device 1002 is preferably a two-way communication device having at least voice and advanced data communication capabilities, including the capability to communicate with other computer systems. Depending on the functionality provided by handheld device 1002, it may be referred to as a data messaging device, a two-way pager, a cellular telephone with data messaging capabilities, a wireless Internet appliance, or a data communication device (with or without telephony capabilities). Handheld device 1002 may communicate with any one of a plurality of base station transceiver systems (not shown) within its geographic coverage area.

Handheld device 1002 will normally incorporate a communication subsystem 1011, which includes a receiver 1012, a transmitter 1014, and associated components, such as one or more (preferably embedded or internal) antenna elements 1016 and 1018, local oscillators (LOs) 1013, and a processing module such as a digital signal processor (DSP) 1020. As will be apparent to those skilled in field of communications, particular design of communication subsystem 1011 depends on the communication network in which handheld device 1002 is intended to operate.

Handheld device 1002 may send and receive communication signals over the network after required network registration or activation procedures have been completed. Signals received by antenna 1016 through the network are input to receiver 1012, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 1020. In a similar manner, signals to be transmitted are processed, including modulation and encoding, for example, by DSP 1020. These DSP-processed signals are input to transmitter 1014 for digital-to-analog (D/A) conversion, frequency up conversion, filtering, amplification and transmission over communication network via antenna 1018. DSP 1020 not only processes communication signals, but also provides for receiver and transmitter control. For example, the gains applied to communication signals in receiver 1012 and transmitter 1014 may be adaptively controlled through automatic gain control algorithms implemented in DSP 1020.

Network access is associated with a subscriber or user of handheld device 1002, and therefore handheld device 1002 comprises a memory module 1062, memory module card or a Removable User Identity Module (R-UIM), to be inserted in or connected to an interface 1064 in order to operate in the network. Alternatively, memory module 1062 may be a non-volatile memory that is programmed with configuration data by a service provider so that mobile station 1002 may operate in the network. Since handheld device 1002 is a mobile battery-powered device, it also includes a battery interface 1054 for receiving one or more rechargeable batteries 1056. Such a battery 1056 provides electrical power to most if not all electrical circuitry in handheld device 1002, and battery interface 1054 provides for a mechanical and electrical connection for it. The battery interface 1054 is coupled to a regulator (not shown in Figure 8) that provides power V+ to all of the circuitry.

Handheld device 1002 includes a microprocessor 1038 that controls overall operation of mobile station 1002. Communication functions, including at least data and voice communications, are performed through communication subsystem 1011. Microprocessor 1038 also interacts with additional device subsystems such as a display 1022, a flash memory 1024, a random access memory (RAM) 1026, auxiliary input/output (I/O) subsystems 1028, a serial port 1030, a keyboard 1032, a speaker 1034, a microphone 1036, a short-range communications subsystem 1040, and any other device subsystems generally designated at 1042. Some of the subsystems shown in Figure 8 perform communication-related functions, whereas other subsystems may provide "resident" or on-device functions. Notably, some subsystems, such as keyboard 1032 and display 1022, for example, may be used for both communication-related functions, such as entering a text message for transmission over a communication network, and device-resident functions such as a calculator or task list. Operating system software used by microprocessor 1038 is preferably stored in a persistent store such as flash memory 1024, which may alternatively be a read-only memory (ROM) or similar storage element (not shown). Those skilled in the art will appreciate that the operating system, specific device applications, or parts thereof, may be temporarily loaded into a volatile store such as RAM 1026.

Microprocessor 1038, in addition to its operating system functions, preferably enables execution of software applications on handheld device 1002. A predetermined set of applications that control basic device operations, including at least data and voice communication applications, will normally be installed on handheld device 1002 during its manufacture. A preferred application that may be loaded onto handheld device 1002 may be a personal information manager (PIM) application having the ability to organize and manage data items relating to a user such as, but not limited to, e-mail, calendar events, voice mails, appointments, and task items. Naturally, one or more memory stores are available on handheld device 1002 and memory module 1062 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on handheld device 1002 with respect to such items. This is especially advantageous where the host computer system is the mobile station user's office or enterprise computer system. Additional applications may also be loaded onto handheld device 1002 through network, an auxiliary I/O subsystem 1028, serial port 1030, short-range communications subsystem 1040, or any other suitable subsystem 1042, and installed by a user in RAM 1026 or preferably a non-volatile store (not shown) for execution by microprocessor 1038. Such flexibility in application installation increases the functionality of handheld device 1002 and may provide enhanced on-device functions, communication-related functions, or both. For example, secure communication applications may enable electronic commerce functions and other such financial transactions to be performed using handheld device 1002.

In a data communication mode, a received signal such as a text message, an e-mail message, or web page download will be processed by communication subsystem 1011 and input to microprocessor 1038. Microprocessor 1038 will preferably further process the signal for output to display 1022 or alternatively to auxiliary I/O device 1028. A user of handheld device 1002 may also compose data items, such as e-mail messages, for example, using keyboard 1032 in conjunction with display 1022 and possibly auxiliary I/O device 1028. Keyboard 1032 is preferably a complete alphanumeric keyboard and/or telephone-type keypad. These composed items may be transmitted over a communication network through communication subsystem 1011.

For voice communications, the overall operation of handheld device 1002 is substantially similar, except that the received signals would be output to speaker 1034 and signals for transmission would be generated by microphone 1036. Alternative voice or audio I/O subsystems, such as a voice message recording subsystem, may also be implemented. Although voice or audio signal output is preferably accomplished primarily through speaker 1034, display 1022 may also be used to provide an indication of the identity of a calling party, duration of a voice call, or other voice call related information, as some examples.

Serial port 1030 in Figure 10 is normally implemented in a personal digital assistant (PDA)-type communication device for which synchronization with a user's desktop computer as a desirable, albeit optional, component. Serial port 1030 enables a user to set preferences through an external device or software application and extends the capabilities of handheld device 1002 by providing for information or software downloads to handheld device 1002 other than through a wireless communication network. The alternate download path may, for example, be used to load an encryption key onto handheld device 1002 through a direct and thus reliable and trusted connection to thereby provide secure device communication.

Short-range communications subsystem 1040 is an additional optional component that provides for communication between handheld device 1002 and different systems or devices, which need not necessarily be similar devices. For example, subsystem 1040 may include an infrared device and associated circuits and components, or a BluetoothTM communication module to provide for communication with similarly enabled systems and devices. BluetoothTM is a registered trademark of Bluetooth SIG, Inc.

Handheld device 1002 may be configured such as via software (instructions and data) to provide the generators and methods as described above.

The systems and methods according to the present patent disclosure may be implemented by any hardware, software or a combination of hardware and software having the above described functions. The software code, either in its entirety or a part thereof, may be stored in a computer-readable memory. Further, a computer data signal representing the software code which may be embedded in a carrier wave may be transmitted via a communication network. Such a computer-readable memory and a computer data signal are also within the scope of the present patent disclosure, as well as the hardware, software and the combination thereof.

While particular embodiments of the present patent disclosure have been shown and described, changes and modifications may be made to such embodiments without departing from the true scope of the patent disclosure.

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

## Claims

1. A database schema generator (200) for converting web service description language (WSDL) structures into database (DB) schemas, the database schema generator comprising:
a WSDL analyzer (202) for obtaining operations and data types from a WSDL; and
a DB element definition builder (204) for building a DB element definition for each WSDL component, the WSDL component comprising:
complex data types of the WSDL; and/or
messages of the WSDL.

2. The DB schema generator (200) as claimed in claim 1, wherein the WSDL analyzer (202) comprises:
a WSDL parser (212) for traversing operations of the WSDL;
a message extractor (214) for extracting messages from the WSDL; and
a data type extractor (216) for extracting complex and simple data types used in the WSDL.

3. The DB schema generator (200) as claimed in claim 1 or claim 2, wherein the DB element definition builder (204) further builds element definitions for each message in the WSDL.

4. The DB schema generator (200) as claimed in claim 3, wherein the DB element definition builder (204) builds definitions for each input message in the WSDL.

5. The DB schema generator (200) as claimed in claim 3 or claim 4, wherein the DB element definition builder (204) builds definitions for each output message in the WSDL.

6. A database structure generator (400) for converting WSDL structures into DB structures, the database structure generator comprising:
the DB schema generator (200) as claimed in any one of claims 1 to 5 for converting a WSDL structure into a DB schema; and
a DB structure tool (406) for generating a DB structure from the DB schema.

7. The database structure generator (400) as claimed in claim 6, further comprising:
an application development tool (402) for integrating enterprise web services and databases with a mobile device; and
an application (404) having a web service or database backend for deployment on the mobile device.

8. A method of converting web service description language (WSDL) structures into database (DB) schemas, the method comprising the steps of:
analyzing a WSDL; and
generating a DB schema based upon a WSDL structure.

9. The method as claimed in claim 8, wherein the step of analyzing a WSDL comprises the steps of:
traversing operations of the WSDL;
extracting messages from the WSDL; and
extracting data types used in the WSDL.

10. The method as claimed in claim 8 or claim 9, wherein the step of generating a DB schema based upon the WSDL structure comprises the step of building a DB element definition for each complex data type of the WSDL.

11. The method as claimed in claim 10, wherein corresponding simple data types that comprise the complex data type are nested within a DB element definition of the complex data type.

12. The method as claimed in claim 10 or claim 11, wherein the step of generating a DB schema based upon the WSDL structure further comprises the step of building a DB element definition for each message in the WSDL.

13. The method as claimed in claim 12, wherein message parts that comprise the messages are nested within a DB element definition of the message.

14. A method of converting a WSDL structure into a DB structure, the method comprising the steps of:
converting WSDL structures into DB schemas in accordance with the method as claimed in any one of claims 8 to 13; and
converting DB schemas into DB structures.

15. The method as claimed in claim 14, wherein the step of converting DB schemas into DB structures comprises the step of generating DB tables from element definitions in a DB schema.

16. The method as claimed in claim 15, wherein the step of generating DB tables comprises the step of generating a complex data DB table based upon a DB element definition of a WSDL complex data type in the DB schema.

17. The method as claimed in claim 16, wherein the step of generating a complex data DB table further comprises the step of defining columns of the complex data DB table as simple data types that comprise the complex data type.

18. The method as claimed in claim 16 or claim 17, wherein the step of generating DB tables further comprises the step of generating a message DB table based upon a DB element definition of a WSDL message in the DB schema.

19. The method as claimed in claim 18, wherein the step of generating message DB table further comprises the step of defining columns of the message DB table as message parts that comprise the message.

20. A computer program product for generating database (DB) schemas, the computer program product comprising a computer readable medium embodying program code means for implementing on a computer processor the method of any one of claims 8 to 13 or the method of any one of claims 14 to 19.

## Amended claims

### Amended claims in accordance with Rule 137(2) EPC.

**1.** A database schema generator, implemented by programming a computer system, (200) for converting web service description language 'WSDL' structures into database 'DB' schemas, the database schema generator comprising:
a WSDL analyzer (202) for obtaining operations and data types from a WSDL; and
a DB element definition builder (204) for building a DB element definition for each WSDL component, the WSDL component comprising:
complex data types of the WSDL; and/or
messages of the WSDL;
wherein the DB element definition builder (204) builds a new DB element definition for complex data types that are reused in the WSDL.

**2.** The DB schema generator (200) as claimed in claim 1, wherein the WSDL analyzer (202) comprises:
a WSDL parser (212) for traversing operations of the WSDL;
a message extractor (214) for extracting messages from the WSDL; and
a data type extractor (216) for extracting complex and simple data types used in the WSDL.

**3.** The DB schema generator (200) as claimed in claim 1 or claim 2, wherein the DB element definition builder (204) further builds element definitions for each message in the WSDL.

**4.** The DB schema generator (200) as claimed in claim 3, wherein the DB element definition builder (204) builds definitions for each input message in the WSDL.

**5.** The DB schema generator (200) as claimed in claim 3 or claim 4, wherein the DB element definition builder (204) builds definitions for each output message in the WSDL.

**6.** A database structure generator, implemented by programming a computer system, (400) for converting WSDL structures into DB structures, the database structure generator comprising:
the DB schema generator (200) as claimed in any one of claims 1 to 5 for converting a WSDL structure into a DB schema; and
a DB structure tool (406) for generating a DB structure from the DB schema.

**7.** The database structure generator (400) as claimed in claim 6, further comprising:
an application development tool (402) for integrating enterprise web services and databases with a mobile device; and
an application (404) having a web service or database backend for deployment on the mobile device.

**8.** A method of converting web service description language 'WSDL' structures into database 'DB' schemas, the method comprising the steps of:
analyzing a WSDL; and
generating a DB schema based upon a WSDL structure comprising the step of:
building a DB element definition for each complex data type of the WSDL
wherein the DB element definition is built for complex data types that are reused in the WSDL.

**9.** The method as claimed in claim 8, wherein the step of analyzing a WSDL comprises the steps of:
traversing operations of the WSDL;
extracting messages from the WSDL; and
extracting data types used in the WSDL.

**10.** The method as claimed in claim 9, wherein corresponding simple data types that comprise the complex data type are nested within the DB element definition of the complex data type.

**11.** The method as claimed in claim 9 or claim 10, wherein the step of generating a DB schema based upon the WSDL structure further comprises the step of building a DB element definition for each message in the WSDL.

**12.** The method as claimed in claim 11, wherein message parts that comprise the messages are nested within a DB element definition of the message.

**13.** A method of converting a WSDL structure into a DB structure, the method comprising the steps of:
converting WSDL structures into DB schemas in accordance with the method as claimed in any one of claims 8 to 13; and
converting DB schemas into DB structures.

**14.** The method as claimed in claim 13, wherein the step of converting DB schemas into DB structures comprises the step of generating DB tables from element definitions in a DB schema.

**15.** The method as claimed in claim 14, wherein the step of generating DB tables comprises the step of generating a complex data DB table based upon a DB element definition of a WSDL complex data type in the DB schema.

**16.** The method as claimed in claim 15, wherein the step of generating a complex data DB table further comprises the step of defining columns of the complex data DB table as simple data types that comprise the complex data type.

**17.** The method as claimed in claim 15 or claim 16, wherein the step of generating DB tables further comprises the step of generating a message DB table based upon a DB element definition of a WSDL message in the DB schema.

**18.** The method as claimed in claim 17, wherein the step of generating message DB table further comprises the step of defining columns of the message DB table as message parts that comprise the message.

**19.** A computer program product for generating database (DB) schemas, the computer program product comprising a computer readable medium embodying program code means for implementing on a computer processor the method of any one of claims 8 to 12 or the method of any one of claims 13 to 18.
